# EUROPÄISCHE PATENTSCHRIFT

(11) **EP 3 511 429 B1**
(45) Veröffentlichungstag und Bekanntmachung des Hinweises auf die Patenterteilung: **24.11.2021**
(21) Anmeldenummer: 18211308.4
(22) Anmeldetag: 10.12.2018
(51) Int. Cl.: C21D 8/12, C23C 10/02, C23C 10/20, C23C 10/30, C23C 10/44, C23C 10/46, H02K 1/26

(54) **VERFAHREN ZUR HERSTELLUNG EINES ELEKTROBLECHPAKETS**
METHOD FOR PRODUCING A ROLLED ELECTRICAL SHEET PACKET
PROCÉDÉ DE FABRICATION DE PAQUETS DE TÔLES ÉLECTRIQUES

(30) Priorität: 11.01.2018 DE 102018200387
(43) Veröffentlichungstag der Anmeldung: 17.07.2019
(73) Patentinhaber: Robert Bosch GmbH, 70442 Stuttgart (DE)
(72) Erfinder: Rammaier, Wolfgang, 71277 Rutesheim (DE); Pieper, Witold, 71272 Renningen (DE)

(56) Entgegenhaltungen:
- EP-A1- 1 260 598
- EP-A1- 1 570 094
- EP-A2- 1 198 052

## Beschreibung

Die vorliegende Erfindung betrifft ein Verfahren zur Harstellung eines Elektroblechpakets.

### Stand der Technik

Elektrobleche bestehen typischerweise aus Eisensiliziumlegierungen und werden über einen Kaltwalzprozess mit anschließender Glühung hergestellt. Der elektrische Widerstand des Blechwerkstoffs hat einen starken Einfluss auf die Ummagnetisierungsverluste beim Einsatz der Bleche in elektrischen Maschinen. Der Widerstand wird vor allem von den Siliziumanteilen oder Aluminiumanteilen der Legierungen bestimmt. Bei Standardelektroblechen beträgt der Siliziumgehalt bis zu 3,5 Gew.-% Silizium. Dies entspricht einem spezifischen elektrischen Widerstand von ca. 0,45 µΩm.

Elektrobleche mit einem hohen Zulegierungsanteil an Silizium und Aluminium sind für die Verwendung in Bauteilen elektrischer Maschinen attraktiv, da die Zulegierungsanteile den elektrischen Widerstand der Elektrobleche erhöhen und damit ihre Ummagnetisierungsverluste verringern. Bei einem hohen Siliziumgehalt von 6,5 Gew.-% ist zusätzlich zu den geringen Ummagnetisierungsverlusten die Magnetostriktion bzw. Sättigungsmagnetostriktion des Werkstoffs nahe 0. Dadurch weisen solche Elektrobleche eine geringe Druckempfindlichkeit und eine hohe magnetische Permeabilität auf. Dadurch werden Elektroblechpakete, die in ein Gehäuse eines Elektromotors eingepresst werden, nur sehr wenig verschlechtert. Da Bleche mit einem Siliziumanteil von über 4 Gew.-% jedoch durch das Auftreten geordneter Phasen spröde und nicht kaltverformbar sind, werden diese trotz ihres hohen elektrischen Widerstandes nicht als Elektrobleche eingesetzt.

Es ist jedoch möglich, ein Eisensiliziumband mit einem Siliziumanteil von ca. 3 Gew.-% nachträglich mittels Gasabscheidung und Wärmebehandlung so zu modifizieren, dass der Siliziumanteil auf bis zu 7 Gew.-% steigt. Dies hat einen deutlich höheren spezifischen elektrischen Widerstand von ungefähr 0,8 µΩm zur Folge. Allerdings ist dieses Verfahren aufwendiger und teurer als die Herstellung eines Standardelektroblechs.

In der DE 10 2015 116 413 A1 wird beispielsweise vorgeschlagen, aus einem Elektroblech gestanzte Elemente mit einer siliziumreichen Beschichtung zu versehen. Diese werden einer Wärmebehandlung unterzogen unter der Silizium aus der Beschichtung in das Elektroblech eindiffundiert. Hierdurch können Siliziumkonzentrationen im Elektroblech von bis zu 7 % generiert werden. Die so erhaltenen Elemente werden zur Bildung eines Ständerkerns aufeinander gestapelt.

Aus der US 4,894,905 ist das Hochkantrollen als Fertigungsverfahren von Elektroblechpaketen bekannt. Dies ist kostengünstiger als das Vollschnittstanzen und Stapeln von Einzellamellen. Dabei werden Nuten in einen geraden Streifen gestanzt und dieser wird anschließend in einer schraubenfederartigen Struktur zu einem Paket gebogen. Dabei erfährt der Blechstreifen eine hohe Verformung, die eine gute Umformbarkeit erfordert. Mit einem siliziumreichen Band können allerdings aufgrund der Sprödigkeit keine hochkantgerollten Pakete oder aus einem linearen Paket gebogenen Stator- oder Rotorpakete gefertigt werden. Mit dem steigenden Siliziumgehalt des Elektrobleches sinkt seine Duktilität und steigt damit der minimal biegbare Radius des Elektroblechpakets. Bei ummagnetisierungsverlustarmen hochsilizierten Elektroblechen ist die Herstellbarkeit von Elektroblechpaketen mit diesem Verfahren deshalb stark eingeschränkt.

Die DE 10 2013 112267 A1 offenbart ein Halbeitermodul mit einer einen Halbleiterbaustein bedeckenden Umhüllungsmasse aus Zement.

### Offenbarung der Erfindung

Das erfindungsgemäße Verfahren ist durch die Merkmale des Anspruchs 1 definiert.

Das Verfahren zur Herstellung eines Elektroblechpakets beginnt mit dem Herstellen eines Ausgangselektroblechpakets aus einem Elektroblechstreifen mittels Hochkantrollen. Der Elektroblechstreifen ist insbesondere warmgewalzt. Eine ausführliche Beschreibung des Hochkantrollens findet sich in der US 4,894,905, die durch Bezugnahme vollständig zum Teil dieser Offenbarung gemacht wird. Blechlagen des Ausgangselektroblechpakets werden mit einer Beschichtung beschichtet. Diese enthält Aluminium und/oder Silizium, wobei die Summe dieser beiden Elemente mindestens 20 Gew.-%, bevorzugt mindestens 40 Gew.-%, besonders bevorzugt mindestens 60 Gew.-%, ganz besonders bevorzugt mindestens 95 Gew.-% von insgesamt 100 Gew.-% der Beschichtung beträgt. Um das Elektroblechpaket zu erhalten, erfolgt eine Wärmebehandlung des beschichteten Ausgangselektroblechpakets. Diesem Verfahren liegt die Erkenntnis zugrunde, dass zur einfachen Herstellbarkeit des Ausgangselektroblechpakets ein Elektroblechstreifen mit einem niedrigen Aluminium- und Siliziumgehalt verwendet werden sollte. Das Beschichten des Ausgangselektroblechpakets erfolgt erst dann, wenn dieses seine endgültige Form angenommen hat. Durch die Wärmebehandlung erfolgt eine Eindiffusion der Beschichtung in das Elektroblech, wobei dessen Aluminiumgehalt und/oder Siliziumgehalt steigt. Zudem heilt hierbei eine durch die Verformung des Elektroblechstreifens beim Herstellen des Ausgangselektrobleches verursachte magnetische Schädigung des Elektrobleches aus. Durch das Eindiffundieren des Aluminiums und/oder Siliziums bei der Wärmebehandlung sinkt die Duktilität des Elektrobleches. Dies ist jedoch unschädlich, da die Verformung des Elektrobleches zu diesem Zeitpunkt bereits abgeschlossen ist.

Um eine so hohe Duktilität des Elektroblechstreifens zu gewährleisten, dass eine gute Herstellung des Ausgangselektroblechpakets mittels Hochkantrollen möglich ist, weist diese einen Gehalt von Aluminium und Silizium auf, der insgesamt maximal 4 Gew.-%, besonders bevorzugt maximal 3 Gew.-%, ganz besonders bevorzugt maximal 0,6 Gew.-% beträgt.

In Ausführungsformen des Verfahrens, in denen die Beschichtung weder aus Aluminium oder einer Aluminiumbasislegierung noch aus Silizium oder einer Siliziumbasislegierung besteht, ist es bevorzugt, dass die Beschichtung eine Eisenbasislegierung ist. Diese ermöglicht ein gutes Eindiffundieren der Beschichtungsbestandteile in das Elektroblech. Wenn die Beschichtung eine Eisenbasislegierung ist, enthält sie bevorzugt mindestens 20 Gew.-%, besonders bevorzugt mindestens 30 Gew.-%, ganz besonders bevorzugt mindestens 40 Gew.-% Silizium. Diese ermöglicht eine weitere Verringerung der Ummagnetisierungsverluste des Elektroblechpakets.

Die Beschichtung kann insbesondere mittels Sprühbeschichten, Tauchbeschichten oder Bedrucken auf das Ausgangselektroblech aufgebracht werden.

Die Wärmebehandlung wird vorzugsweise so durchgeführt, dass neben dem Eindiffundieren der Beschichtung in das Elektroblech zusätzliche Blechlagen des beschichteten Ausgangselektroblechpakets miteinander versintert werden. Dies erhöht die Festigkeit des Elektroblechpakets.

Die Wärmebehandlung wird entweder durchgeführt, bis im Elektroblechpaket eine homogene Verteilung von Aluminium und/oder Silizium erreicht ist. Mittels dieser Ausführungsform des Verfahrens kann insbesondere ein Elektroblechpaket erhalten werden, dessen Siliziumgehalt mindestens 6,5 Gew.-% beträgt.

Oder die Wärmebehandlung wird nicht durchgeführt, bis im Elektroblechpaket eine homogene Verteilung von Aluminium und/oder Silizium erreicht ist, sondern nur bis mindestens ein Gradient des Aluminiumgehalts und/oder Siliziumgehalts vorliegt. Dieser Gradient erstreckt sich über Teile des ursprünglichen Elektroblechstreifens und auch über eventuell noch nicht vollständig in das Elektroblech eindiffundierte Teile der Beschichtung. Der Begriff "ein Gradient" soll dabei nicht als ein einziger Gradient verstanden werden, der sich über das gesamte Elektroblechpaket erstreckt. Vielmehr genügt es, dass der Gradient in einem Bereich des Elektroblechpakets typischerweise innerhalb eines Bleches vorliegt. Je nach Form des Elektroblechpakets kann dieses viele Gradienten aufweisen, die sich von den ursprünglich beschichteten Bereichen des Ausgangselektroblechpakets in den Elektroblechstreifen des wärmebehandelten Elektroblechpakets hineinerstrecken. In dieser Ausführungsform besteht der Elektroblechstreifen vorzugsweise aus einer Eisenbasislegierung, die 0,05 Gew.-% bis 0,30 Gew.-% Kohlenstoff enthält. Der Siliziumgehalt der Eisenbasislegierung beträgt vorzugweise maximal 0,6 Gew.-%. Auf diese Weise kann ein Elektroblechpaket erhalten werden, dessen Siliziumgehalt mehr als 4 Gew.-% und weniger als 6,5 Gew.-% beträgt. Durch den im Gradienten lokal hohen Siliziumgehalt vor allem an der Blechoberfläche, wo die höchsten Ummagnetisierungsverluste anfallen werden dennoch insgesamt geringe Ummagnetisierungsverluste erreicht.

### Kurze Beschreibung der Zeichnungen

Ausführungsbeispiele der Erfindung sind in den Zeichnungen dargestellt und werden in der nachfolgenden Beschreibung näher erläutert.
Fig. 1 zeigt eine Aufsicht auf einen Elektroblechstreifen, der in einem Ausführungsbeispiel des erfindungsgemäßen Verfahrens zur Herstellung eines Elektroblechpakets verwendet werden kann.
Fig. 2 zeigt eine Aufsicht auf ein Ausgangselektroblechpaket, das in einem Verfahren gemäß einem Ausführungsbeispiel der Erfindung zur Herstellung eines Elektroblechpakets verwendet werden kann.
Fig. 3 zeigt schematisch, wie in einem Ausführungsbeispiel des erfindungsgemäßen Verfahrens ein Elektroblechpaket durch eine Wärmebehandlung erhalten wird.
Fig. 4 zeigt schematisch, wie in einem anderen Ausführungsbeispiel des erfindungsgemäßen Verfahrens ein Elektroblechpaket durch eine Wärmebehandlung erhalten wird.

### Ausführungsbeispiele der Erfindung

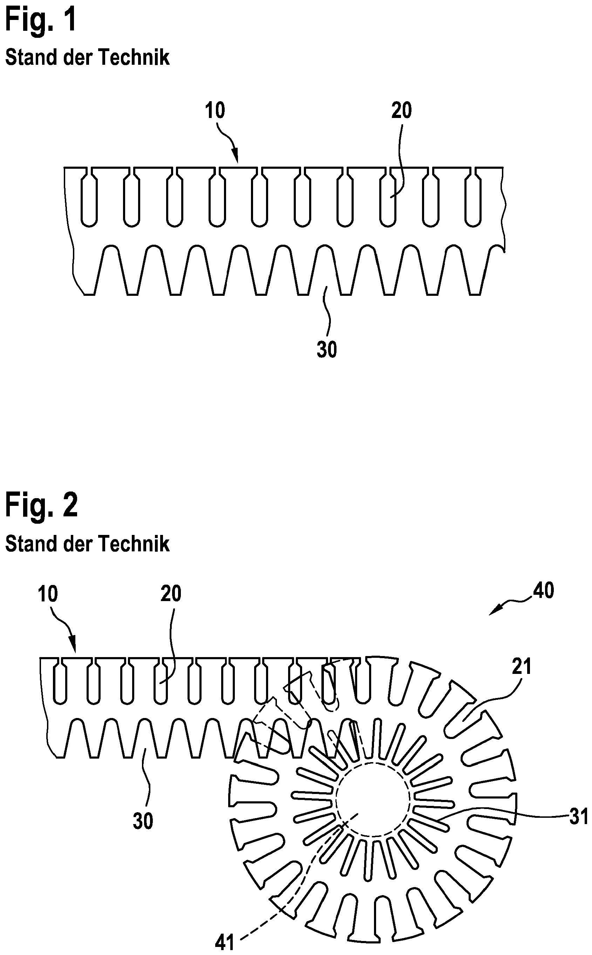

Fig. 1 zeigt einen Elektroblechstreifen 10, der für die Herstellung eines Ausgangselektroblechpakets mittels Hochkantrollen vorgesehen ist. Dieser besteht vorliegend aus einem warmgewalzten Stahlblech der Walzart DC01 gemäß der Norm DIN EN 10130. Er weist auf einer Seite erste Nuten 20 auf und auf der gegenüberliegenden anderen Seite zweite Nuten 30 auf.

In Fig. 2 ist dargestellt, wie das Ausgangselektroblechpaket 40 erhalten werden kann, indem der Elektroblechstreifen 10 schraubenfederartig um einen Dorn 41 gewunden wird. Dabei verformt sich der Elektroblechstreifen 10, sodass die ersten Nuten 20 zu vergrößerten ersten Nuten 21 aufgeweitet werden. Die zweiten Nuten 30, die dem Dorn 41 zugewandt sind, werden zu verkleinerten zweiten Nuten 31 zusammengepresst.

Das Ausgangselektroblechpaket 40 wird mittels Sprühbeschichten mit einer Beschichtung versehen. Bei dieser Beschichtung handelt es sich um eine Eisenbasislegierung, die 40 Gew.-% Silizium und 20 Gew.-% Aluminium enthält.

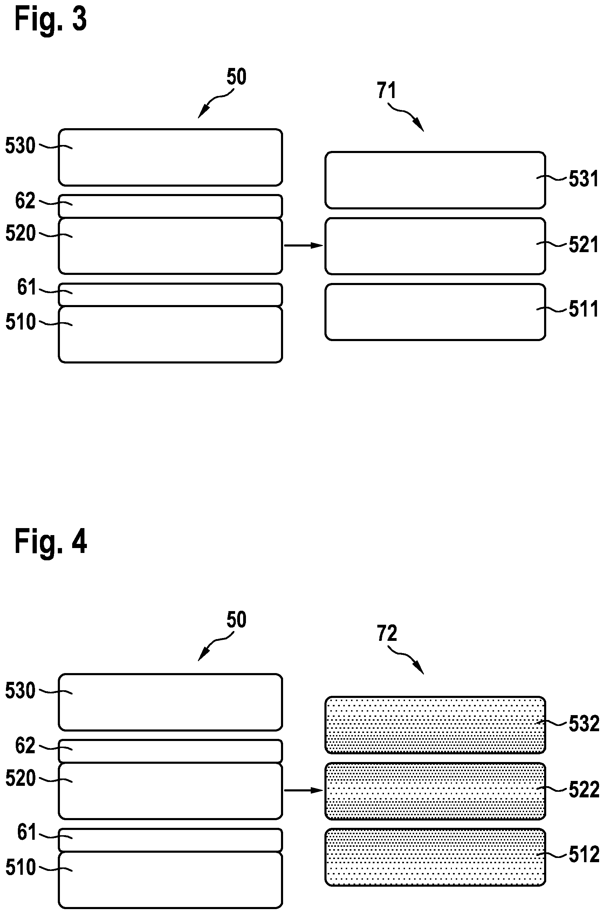

Wie in Fig. 3 dargestellt ist, wird auf diese Weise ein beschichtetes Ausgangselektroblechpaket 50 erhalten, dessen Blechlagen 510, 520, 530, jeweils auf ihrer einer anderen Blechlage zugewandten Seite eine Beschichtung 61, 62, aufweisen. In einem ersten Ausführungsbeispiel des erfindungsgemäßen Verfahrens besteht der Elektroblechstreifen 10 und damit auch die Blechlagen 510, 520, 530, aus einem Standardelektroblech, das 3,5 Gew.-% Silizium enthält. Durch eine Wärmebehandlung bei 1000 - 1200°C über einen Zeitraum von 6 h wird ein Elektroblechpaket 71 erhalten, in dessen Blechlagen 511, 521, 531, die Beschichtung 61, 62, so eindiffundiert ist, dass das Elektroblechpaket 71 einen homogenen Siliziumgehalt von 6,5 Gew.-% aufweist. Zudem sind die Blechlagen 511, 521, 531, miteinander versintert.

Ein zweites Ausführungsbeispiel des erfindungsgemäßen Verfahrens ist in Fig. 4 dargestellt. In diesem bestehen der Elektroblechstreifen 10 und damit auch die Blechlagen 510, 520, 530, aus Low Carbon Steel mit einem Kohlenstoffgehalt von 0,2 Gew.-% und einem Siliziumgehalt von 0,5 Gew.-%. Durch eine Wärmebehandlung bei 1000 - 1200°C über einen Zeitraum von 6 h wird ein Elektroblechpaket 42 aus miteinander versinterten Blechlagen 512, 522, 532, erhalten. Diese Blechlagen 512, 522, 532, weisen einen gesamten mittleren Siliziumgehalt von 4% auf. Dieser ist jedoch nicht homogen über das Elektroblechpaket 72 verteilt. Vielmehr liegen in dem Elektroblechpaket 72 Gradienten des Siliziumgehalts vor. Diese sind in Fig. 4 durch Punkte dargestellt, wobei eine hohe Punktdichte einem hohen Siliziumgehalt und eine niedrige Punktdichte einem niedrigen Siliziumgehalt entspricht. Die Gradienten gehen jeweils von den Bereichen aus, in dem sich ursprünglich die Beschichtung 61, 62, befand. Hier ist der Siliziumgehalt am höchsten und fällt ins Innere der Blechlagen 512, 522, 532, ab.

In weiteren Ausführungsbeispielen der Erfindung können beispielsweise auch Beschichtungen mit einer der folgenden Zusammensetzungen verwendet werden:
- 100 Gew.-% Silizium
- 60 Gew.-% Silizium, 30 Gew.-% Aluminium, Rest: Eisen
- 40 Gew.-% Silizium, 40 Gew.-% Aluminium, Rest: Eisen
- 100 Gew.-% Aluminium

## Patentansprüche

1. Verfahren zur Herstellung eines Elektroblechpakets (71, 72), umfassend die folgenden Schritte:
- Herstellen eines Ausgangselektroblechpakets (40) aus einem Elektroblechstreifen (10) mittels Hochkantrollen, wobei der Elektroblechstreifen (10) maximal 4 Gew.-% Aluminium und/oder Silizium enthält,
- Beschichten von Blechlagen (510, 520, 530) des Ausgangselektroblechpaktes (40) mit einer Beschichtung (61, 62), die mindestens 20 Gew.-% Aluminium und/oder Silizium enthält, und
- Wärmebehandlung des beschichteten Ausgangselektroblechpakets (50), um das Elektroblechpaket (71, 72) zu erhalten, wobei die Wärmebehandlung durchgeführt wird, bis im Elektroblechpaket (71) eine homogene Verteilung von Aluminium und/oder Silizium erreicht ist oder bis im Elektroblechpaket (72) mindestens ein Gradient des Aluminiumgehalts und/oder Siliziumgehalts vorliegt.

2. Verfahren nach Anspruch 1, **dadurch gekennzeichnet, dass** die Beschichtung (61, 62) eine Eisenbasislegierung ist.

3. Verfahren nach Anspruch 2, **dadurch gekennzeichnet, dass** die Beschichtung (61, 62) mindestens 20 Gew.-% Silizium enthält.

4. Verfahren nach einem der Ansprüche 1 bis 3, **dadurch gekennzeichnet, dass** die Beschichtung (61, 62) mittels Sprühbeschichten, Tauchbeschichten oder Bedrucken auf das Ausgangselektroblechpaket (40) aufgebracht wird.

5. Verfahren nach einem der Ansprüche 1 bis 4, **dadurch gekennzeichnet, dass** bei der Wärmebehandlung eine Versinterung von Blechlagen (510, 520, 530) des beschichteten Ausgangselektroblechpakets (50) durchgeführt wird.

## Claims

1. Method for producing an electrical sheet pack (71, 72), comprising the following steps:
- producing a starting electrical sheet pack (40) from an electrical sheet strip (10) by means of vertical edge-rolling, wherein the electrical sheet strip (10) contains at most 4% by weight of aluminium and/or silicon,
- coating sheet layers (510, 520, 530) of the starting electrical sheet pack (40) with a coating (61, 62) which contains at least 20% by weight of aluminium and/or silicon, and
- subjecting the coated starting electrical sheet pack (50) to a heat treatment in order to obtain the electrical sheet pack (71, 72), wherein the heat treatment is carried out until a homogeneous distribution of aluminium and/or silicon is reached in the electrical sheet pack (71) or until there is at least one gradient of the aluminium content and/or silicon content in the electrical sheet pack (72).

2. Method according to Claim 1, **characterized in that** the coating (61, 62) is an iron-based alloy.

3. Method according to Claim 2, **characterized in that** the coating (61, 62) contains at least 20% by weight of silicon.

4. Method according to one of Claims 1 to 3, **characterized in that** the coating (61, 62) is applied to the starting electrical sheet pack (40) by means of spray coating, dip coating or printing.

5. Method according to one of Claims 1 to 4, **characterized in that** sheet layers (510, 520, 530) of the coated starting electrical sheet pack (50) are sintered during the heat treatment.

## Revendications

1. Procédé pour la fabrication d'un paquet (71, 72) de tôles magnétiques, comprenant les étapes suivantes :
- fabrication d'un paquet de tôles magnétiques de départ (40) à partir d'une bande (10) de tôles magnétiques au moyen de rouleaux verticaux, la bande (10) de tôles magnétiques contenant au maximum 4 % en poids d'aluminium et/ou de silicium,
- revêtement de couches de tôles (510, 520, 530) du paquet de tôles magnétiques de départ (40) avec un revêtement (61, 62) qui contient au moins 20 % en poids d'aluminium et/ou de silicium, et
- traitement thermique du paquet de tôles magnétiques de départ revêtu (50), afin d'obtenir le paquet (71, 72) de tôles magnétiques, le traitement thermique étant réalisé jusqu'à ce qu'une répartition homogène d'aluminium et/ou de silicium dans le paquet (71) de tôles magnétiques soit atteinte ou jusqu'à ce qu'au moins un gradient de la teneur en aluminium et/ou de la teneur en silicium dans le paquet (72) de tôles magnétiques soit présent.

2. Procédé selon la revendication 1, **caractérisé en ce que** le revêtement (61, 62) est un alliage à base de fer.

3. Procédé selon la revendication 2, **caractérisé en ce que** le revêtement (61, 62) contient au moins 20 % en poids de silicium.

4. Procédé selon l'une quelconque des revendications 1 à 3, **caractérisé en ce que** le revêtement (61, 62) est appliqué sur le paquet de tôles magnétiques de départ (40) au moyen d'un revêtement par pulvérisation, d'un revêtement par trempage ou d'une impression.

5. Procédé selon l'une quelconque des revendications 1 à 4, **caractérisé en ce que** lors du traitement thermique, un frittage de couches de tôles (510, 520, 530) du paquet de tôles magnétiques de départ revêtu (50) est réalisé.
